# FASCICULE DE BREVET EUROPEEN

(11) **EP 2 691 551 B1**
(45) Date de publication et mention de la délivrance du brevet: **17.08.2016**
(21) Numéro de dépôt: 12715193.4
(22) Date de dépôt: 29.03.2012
(51) Int. Cl.: C22C 14/00, C22C 1/04, C22C 29/18, C22C 32/00, B22F 3/105, B22F 3/14, B22F 5/04, C04B 35/645, F01D 5/28

(54) **PROCEDE DE FABRICATION PAR FRITTAGE FLASH D'UNE PIECE DE FORME COMPLEXE**
VERFAHREN ZUR HERSTELLUNG EINES TEILS MIT KOMPLEXER FORM DURCH FLASH-SINTERN
METHOD FOR MANUFACTURING A PART HAVING A COMPLEX SHAPE BY FLASH SINTERING

(30) Priorité: 31.03.2011 FR 1152761
(43) Date de publication de la demande: 05.02.2014
(73) Titulaire: Centre National de la Recherche Scientifique, 75016 Paris (FR)
(72) Inventeur: COURET, Alain, F-09700 Saverdun (FR); MONCHOUX, Jean-Philippe, F-31500 Toulouse (FR); DURAND, Lise, F-31000 Toulouse (FR); JABBAR, Houria, F-31400 Toulouse (FR); VOISIN, Thomas, F-31400 Toulouse (FR)
(74) Mandataire: Gevers & Orès
(86) Numéro de dépôt international: PCT/IB2012/051527
(87) Numéro de publication internationale: WO 2012/131625

(56) Documents cités:
- WO-A1-2011/030815
- FR-A1- 2 906 242
- FR-A1- 2 906 242
- FR-A1- 2 941 965
- FR-A1- 2 941 966
- GB-A- 2 416 544
- JP-A- 2004 137 600
- US-A1- 2004 126 266
- US-B1- 6 384 365
- MOLENAT, G. ET AL: "Application of spark plasma sintering to titanium aluminide alloys", ADVANCED ENGINEERING MATERIALS , 9(8), 667-669 CODEN: AENMFY; ISSN: 1438-1656, 2007, XP002669471,
- COURET A ET AL: "Microstructures and mechanical properties of TiAl alloys consolidated by spark plasma sintering", INTERMETALLICS, ELSEVIER SCIENCE PUBLISHERS B.V, GB, vol. 16, no. 9, 1 septembre 2008 (2008-09-01), pages 1134-1141, XP024524236, ISSN: 0966-9795, DOI: 10.1016/J.INTERMET.2008.06.015 [extrait le 2008-08-09]
- DATABASE CA [Online] CHEMICAL ABSTRACTS SERVICE, COLUMBUS, OHIO, US; 17 mars 1999 (1999-03-17), KATO, KIYOTAKA ET AL: "Trial manufacturing of TiAl parts by injection molding", XP002669472, extrait de STN Database accession no. 1999:175939
- ORRU R ET AL: "Consolidation/synthesis of materials by electric current activated/assisted sintering", MATERIALS SCIENCE AND ENGINEERING R: REPORTS, ELSEVIER SEQUOIA S.A., LAUSANNE, CH, vol. 63, no. 4-6, 12 février 2009 (2009-02-12), pages 127-287, XP025914673, ISSN: 0927-796X, DOI: 10.1016/J.MSER.2008.09.003 [extrait le 2009-01-08]
- BEWLAY B P ET AL: "A review of very-high-temperature Nb-silicide-based composites", METALLURGICAL AND MATERIALS TRANSACTIONS A, SPRINGER-VERLAG, NEW YORK, vol. 34, no. 10, 1 octobre 2003 (2003-10-01), pages 2043-2052, XP019694521, ISSN: 1543-1940
- MIDDLEMAS M R ET AL: "Dense, fine-grain Mo-Si-B alloys from nitride-based reactions", J O M, SPRINGER NEW YORK LLC, UNITED STATES, vol. 60, no. 7, 1 juillet 2008 (2008-07-01), pages 19-24, XP009171898, ISSN: 1047-4838, DOI: 10.1007/S11837-008-0084-1
- BOSE ET AL: "Engineering aspect of creep deformation of molybdenum disilicide", MATERIALS SCIENCE AND ENGINEERING A: STRUCTURAL MATERIALS:PROPERTIES, MICROSTRUCTURE & PROCESSING, LAUSANNE, CH, vol. 155, no. 1-2, 30 juin 1992 (1992-06-30), pages 217-225, XP024169788, ISSN: 0921-5093, DOI: 10.1016/0921-5093(92)90328-X [extrait le 1992-06-30]
- ROBERT AALUND, THERMAL TECHNOLOGY LLC: "Spark Plasma Sintering", CERAMIC INDUSTRY MAGAZINE, 30 May 2008 (2008-05-30),
- OLIVIER GUILLON ET AL.: "Filed-assisted sintering technology / Spark plasma sintering: Mechanisms, Materials, and Technology Developments", ADVANCE ENGINEERING MATERIALS, vol. 16, 31 December 2014 (2014-12-31), pages 830-849, Weinheim DOI: 10.1002/adem.201300409

## Description

L'invention porte sur un procédé de fabrication par frittage flash d'une pièce de forme complexe, telle qu'une préforme près des cotes d'une aube de turbine.

Le frittage flash (également connu sous l'acronyme « SPS », de l'anglais « Spark Plasma Sintering ») est une technique de frittage dans laquelle un matériau pulvérulent est compacté en le soumettant à une pression uniaxiale à l'intérieur d'une matrice tout en le chauffant rapidement par application d'un courant électrique. La rapidité du chauffage limite les processus de diffusion et permet ainsi l'obtention de matériaux présentant des microstructures originales. Pour les alliages intermétalliques, l'intérêt réside principalement dans la limitation du grossissement des grains et donc dans le raffinement des microstructures.

L'article de R. Orru et al. « Consolidation/synthesis of materials by electric current activated/assisted sintering », Material Science and Engineering R 63 (2009) 127 - 287 fournit une présentation générale de cette technique. Il convient de noter que, dans cette publication, on entend par « SPS » seulement les procédés de frittage dans lesquels le courant électrique est appliqué sous la forme d'impulsions de courant continu (c'est-à-dire sans inversion de polarité). Dans le cadre de la présente invention, l'expression « frittage flash » doit être entendue d'une manière plus générale, incluant aussi les variantes dans lesquelles le courant est de type alternatif, ou continu non pulsé.

La plupart des études sur le frittage flash se concentrent sur la réalisation de pièces cylindriques, ou tout au plus prismatiques. Même du point de vue industriel, cette technique est principalement utilisée pour réaliser des disques, cylindres ou prismes qui sont ensuite usinés pour obtenir des pièces plus complexes. Cette approche est coûteuse et ne permet pas d'exploiter efficacement certains matériaux aux propriétés mécaniques intéressantes, mais difficilement usinables.

En alternative ou en complément, il est connu de recourir au frittage flash pour assembler des éléments plus simples, pouvant être obtenus préalablement par frittage flash (voir à ce propos le document FR 2 906 242). La nécessité d'avoir recours à plusieurs étapes de frittage entraine une augmentation des coûts. En tout cas, une telle approche ne convient pas à toutes les applications car elle ne permet de réaliser que des assemblages d'un petit nombre de pièces de forme simple (plaque, cylindre, prisme, etc.).

La fabrication « directe » par frittage flash de pièces présentant des formes plus complexes a toujours été considérée très difficile et a fait l'objet d'un nombre relativement limité d'études académiques et de réalisations industrielles.

L'article de E. Olevsky et al « Fundamentals of Spark-Plasma Sintering: Applications to Net-Shaping of High Strength Temperature Resistant Components », Material Science Forums Vols. 654-656 (2010) pp.412 - 415 fait état de la fabrication de pièces en forme de cylindre ou prisme de faible hauteur et de section circulaire, dont seules les bases sont structurées par la présence de nervures. Les auteurs insistent sur le fait qu'il est peu usuel - et difficile - de fabriquer des pièces de forme complexe par frittage flash. Même dans le cas relativement simple qu'ils considèrent, la microstructure des pièces réalisées apparait sensiblement inhomogène.

L'article de Guy Molénat et al. « Application of Spark Plasma Sintering to Titanium Aluminide Alloys », Advanced Engineering Materials 2007, 9, No/ 8 étudie le frittage flash du *TiAl.* Bien que l'application à la réalisation d'aubes de turbine soit évoquée, d'une manière générale, comme un objectif à atteindre, seuls des échantillons cylindriques sont effectivement fabriqués.

Le document EP 0 535 593 fait état de la fabrication par frittage flash de pièces en forme de spirale, à symétrie quasiment cylindrique. Le procédé de fabrication nécessite une étape de compactage préalable au frittage.

Le document FR 2 512 146 décrit la réalisation par frittage flash de plaques minces pouvant être utilisées comme plaquettes de frein.

Le document JP 2004-168632 décrit la fabrication d'un injecteur de forme effilée par frittage flash en deux étapes.

Le document JP 1228730 décrit la fabrication par frittage flash d'une filière de tréfilage en forme de galet cylindrique avec un ou plusieurs évidements effilés.

Le document JP 3267552 décrit la fabrication d'une jupe de piston, comprenant une étape de réalisation, par frittage flash, d'une préforme globalement cylindrique, suivie d'une étape d'emboutissage profond de ladite préforme.

Le document WO 2009/004444 décrit la réalisation par frittage flash de pièces creuses, de forme sensiblement hémisphérique, en matériau poreux biocompatible.

Dans tous les cas précités on reste dans le cadre de pièces relativement simples, essentiellement à symétrie cylindrique (EP 0 535 593, JP 2004-168632, JP 1228730, JP 1228730, JP 3267552) ou alors en forme de plaque ou coque mince (FR 2 512 146, WO 2009/004444). Même pour ces formes relativement simples, un procédé en plusieurs étapes est parfois nécessaire (EP 0 535 593 : compactage préalable ; JP 2004-168632 : frittage flash en deux étapes ; JP 3267552 : emboutissage d'une préforme). Par ailleurs, les applications visées par les documents précités sont généralement peu contraignantes du point de vue mécanique, ce qui autorise un certain degré d'inhomogénéité de la microstructure des pièces fabriquées (dans le cas du document WO 2009/004444, une porosité élevée est même recherchée).

L'article de Kiyotaka Kato et al. « Trial manufacturing of TiAl parts by injection molding », 17 mars 1999 Chemical Abstract Service, Columbus, Ohio (Etats-Unis) fait état de la fabrication de pièces en TiAl en forme d'aube de turbine par un procédé de moulage par injection. Les pièces ainsi obtenues présentent une densité relativement inhomogène et une porosité non négligeable.

L'article de MOLENAT, G. ET AL: "Application of spark plasma sintering to titanium aluminide alloys",ADVANCED ENGINEERING MATERIALS, 9(8), 667-669 CODEN: AENMFY; ISSN: 1438-1656, 2007 fait état de la fabrication des pièces en forme de cylindre par frittage flash.

L'invention vise à remédier aux inconvénients précités de l'art antérieur et à permettre la réalisation directe par frittage flash de pièces de forme complexe présentant une microstructure très compacte et homogène, et pouvant de ce fait être exposées à des sollicitations mécaniques importantes. Ces pièces peuvent être par exemple des préformes près des cotes d'aubes de turbine, comprenant une base massive et une voilure en forme de coque gauche. A la connaissance des inventeurs, le frittage flash n'a jamais été appliqué à la fabrication d'éléments aussi complexes. Tout au plus, il est connu des documents WO 2010/092298 et FR 2 941 965 d'avoir recours à une technique de frittage flash pour déposer une fine couche de revêtement en céramique sur des aubes de turbine en superalliage, fabriquées par tirage de monocristaux suivi par un usinage de surface.

L'objet de l'invention est le procédé de fabrication défini par la revendication 1.

On entend par « tige » une pièce, de section constante ou variable, présentant une élongation dans une direction et pouvant être inscrite dans un cylindre ou prisme de longueur L et de diamètre (ou côté) de la base D, de rapport L/D supérieur ou égal à 2 et de préférence supérieur ou égal à 4.

On entend par « plaque » un volume limité par deux surfaces planes, distantes d'une épaisseur e, petite devant les autres dimensions d₁, d₂, avec des rapports d₁/e et d₂/e supérieur ou égal à 3 et de préférence supérieur ou égal à 5.

On entend par « biseau » un volume limité par deux surfaces planes quasiment parallèles (formant un angle inférieur ou égal à 15°), distantes d'une épaisseur moyenne eₘ, petite devant les autres dimensions d₁, d₂, avec des rapports d₁/eₘ et d₂/eₘ supérieurs ou égaux à 3 et de préférence supérieur ou égal à 5.

On entend par « coque » un volume limité par deux surfaces non planes, quasiment parallèles (angle inférieur ou égal à 15°), distantes d'une épaisseur moyenne eₘ petite devant les autres dimensions d₁, d₂, avec des rapports d₁/eₘ et d₂/eₘ supérieurs ou égaux à 3 et de préférence supérieur ou égal à 5.

On entend par « pièce massive » une pièce dans laquelle le rapport entre la plus grande et la plus petite dimension n'excède pas un facteur 2.

On entend par « base » une pièce, massive ou bien de type plaque ou coque, dont la ou les plus grandes dimensions sont sensiblement perpendiculaires à ladite direction d'élancement de ladite première partie. De préférence, lesdites plus grandes dimensions d'une base ne devraient pas excéder la moitié de la plus grande dimension de ladite première partie.

Avec le procédé selon l'invention, le frittage flash se fait en conditions de matrice flottante. Pour que le matériau soit en conditions de « matrice flottante » il faut qu'en tout point dudit matériau qui est en contact avec les surfaces d'appui latérales, le matériau puisse se déplacer au cours de la densification parallèlement auxdites surfaces d'appui latérales, le vecteur déplacement correspondant devant par ailleurs comporter une composante non nulle parallèle à la direction d'application de la pression. On entend par « surface d'appui latérale » toute surface d'un piston, d'un insert ou de la matrice en contact avec le matériau et sensiblement parallèle à la direction d'application de la pression ou, plus généralement, formant un angle inférieur à 45° avec ladite direction.

Selon des modes de réalisation particuliers du procédé selon l'invention :
- Au moins les deux dits pistons et la pièce à fabriquer (et, le cas échéant, les pièces de transmission de force) peuvent être entourés de pièces dites inserts présentant une section généralement en « D », avec une première surface épousant la forme d'un ensemble comprenant la matrice, les pistons, le matériau constitutif pulvérulent et les inserts et une deuxième surface en forme d'arc cylindrique, épousant la forme de la surface interne de la matrice.
- Le procédé peut comporter une étape préalable de calibrage des températures, de manière à associer à chaque valeur de la température mesurée en un point de la matrice ou des pistons par un capteur un champ de température à l'intérieur d'un ensemble comprenant la matrice, les pistons, le matériau constitutif pulvérulent et les inserts éventuels ; et un asservissement de la puissance du courant électrique de manière à contrôler l'écart entre la température mesurée par le dit capteur et une température de consigne. Avantageusement, ladite température de consigne peut être déterminée par modélisation numérique.
- Ledit matériau constitutif pulvérulent peut être à base d'un alliage métallique, par exemple un alliage à base de titane, ou bien d'un alliage intermétallique, par exemple base TiAl. On entend par « alliage base TiAl » un alliage comprenant au moins 40% et de préférence au moins 45% de Ti, et au moins 40% et de préférence au moins 45% d'Al. Les pourcentages se rapportent à la composition atomique. En variante, ledit matériau constitutif pulvérulent peut comprendre un métal, tel que Nb ou Mo, et un siliciure du même (ou d'un autre) métal, ainsi que d'éventuels éléments d'addition ou d'alliage tels que Ti, Cf, Hf, Al, etc.
- Ladite première partie de la pièce à fabriquer peut être une coque gauche. On entend par « coque gauche » une coque (voir définition ci-dessus) dont les surfaces quasiment parallèles sont non réglées, c'est-à-dire qu'elles ne peuvent pas être générées par le déplacement d'une droite.
- Ladite pièce à fabriquer peut être en particulier une préforme d'aube de turbine près des cotes. On appelle « près des cotes » une préforme dont aucun point de la surface ne s'écarte de la forme de la pièce finale de plus de 1 mm.

Avec le procédé selon l'invention, on peut obtenir une aube de turbine en alliage intermétallique base TiAl frittée par frittage flash, de préférence présentant une porosité de fraction volumique inférieure ou égale à 0,1%, et de préférence inférieure ou égale à 0,01%, et de préférence ne présentant aucune porosité détectable (par exemple, par microscopie électronique à balayage). En effet, les intermétalliques base TiAl sont des matériaux particulièrement attractifs pour la fabrication d'aubes de turbine, car leur densité est environ la moitié (~4 g/cm³) de celle des superalliages couramment utilisés pour cette application (~8 g/cm³). Cependant, il s'agit de matériaux difficiles et coûteux à usiner : il aurait donc été économiquement non rentable de façonner une aube de turbine en intermétalliques base TiAl à partir d'une préforme conventionnelle, de forme cylindrique ou prismatique, réalisée par les procédés de frittage flash de l'art antérieur. La réalisation d'aubes de turbine en alliage intermétallique base TiAl par métallurgie des poudres à un prix compétitif n'a donc été rendue possible que par le procédé de l'invention. De plus, le procédé par frittage flash apporte une amélioration des propriétés mécaniques par un raffinement des microstructures.

Avec le procédé selon l'invention, on peut obtenir une aube de turbine base métal-siliciure (par exemple base Nb/Nb₅Si₃ ou Mo/MoSi₂, contenant d'éventuels éléments d'alliage tels que Ti, Cr, Hf, Al, etc.) frittée par frittage flash, de préférence présentant une porosité de fraction volumique inférieure ou égale à 0,1%, et de préférence inférieure ou égale à 0,01%, et de préférence ne présentant aucune porosité détectable (par exemple, par microscopie électronique à balayage).

D'autres caractéristiques, détails et avantages de l'invention ressortiront à la lecture de la description faite en référence aux dessins annexés donnés à titre d'exemple et qui représentent, respectivement :
- La figure 1, une préforme près des cotes d'une aube de turbine en TiAI réalisée par le procédé de l'invention ;
- La figure 2A, une vue en coupe d'une préforme identique à celle de la figure 1 ;
- Les figures 2B - 2E, quatre images obtenues par microscopie électronique à balayage montrant la bonne densification (figures de gauche) et la microstructure (figures de droite) de différentes parties de la préforme de la figure 2A ;
- La figure 3, une vue éclatée de l'assemblage constitué par la matrice de frittage, les deux pistons d'application d'une pression uniaxiale, les inserts périphériques en forme de « D » et la pièce frittée (une préforme d'aube de turbine), selon un mode de réalisation de la présente invention ;
- La figure 4, une vue de l'assemblage de la figure 3 en conditions opérationnelles ;
- La figure 5A, la fabrication d'une préforme d'aube de turbine selon un procédé contraire à l'enseignement de la présente invention ;
- Les figures 5B et 5C, deux images obtenues par microscopie électronique à balayage montrant la microstructure de différentes parties d'une préforme en TiAl obtenue par le procédé de la figure 5A ;
- La figure 6, une vue éclatée de l'assemblage constitué par la matrice de frittage, les deux pistons d'application d'une pression uniaxiale, les inserts périphériques en forme de « D », des pièces de transmission de force et la pièce frittée (une préforme d'aube de turbine), selon un mode de réalisation alternatif de la présente invention ; et
- La figure 7, une image obtenue par microscopie électronique à balayage montrant la microstructure d'une préforme en Nb/Nb₅Si₃ obtenue par un procédé selon l'invention.

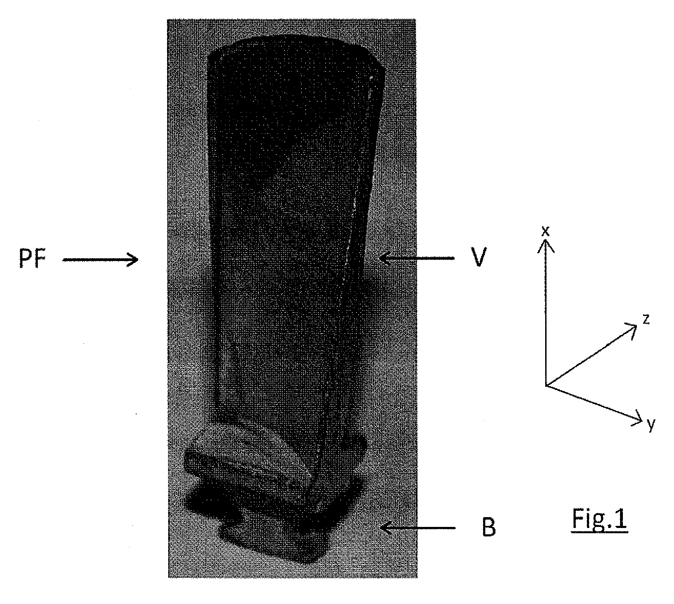

La figure 1 montre une préforme PF d'aube de turbine réalisée en TiAl par un procédé de frittage flash selon l'invention. Cette préforme - d'une hauteur de 36 mm - est sensiblement identique à l'aube finie, et ne nécessite qu'une étape de finition, avec enlèvement d'une épaisseur de matière de l'ordre de 0,5 mm. Elle peut donc être qualifiée de « près des cotes ». L'épaisseur de matière à enlever peut être réduite ultérieurement, jusqu'à une valeur de l'ordre de 0,1 mm correspondant à une couche de contamination du matériau par le graphite. Tout comme une aube prête à l'emploi, la préforme PF comprend une base B massive, de forme complexe, ne pouvant pas être définie à partir d'un petit nombre de formes géométriques simples, et une voilure V en forme de coque gauche, présentant un élancement marqué selon un axe « x ». Il est immédiat de constater que la forme de cette pièce est plus complexe que celle de tous les objets dont la fabrication par frittage flash a été décrite dans les documents d'art antérieur cités plus haut.

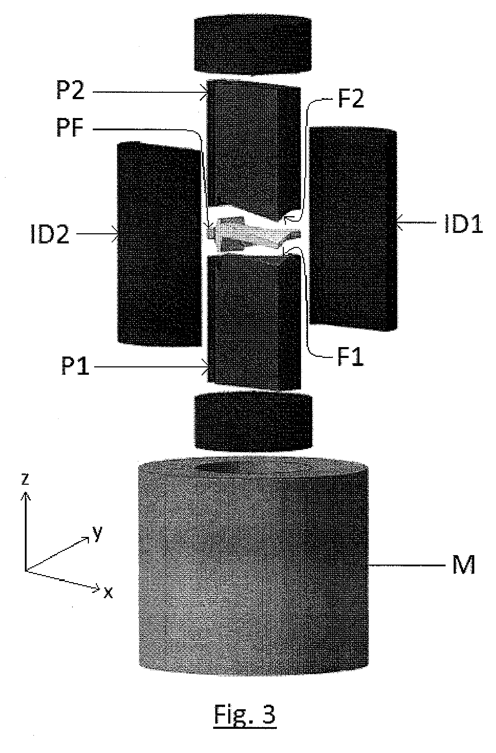

Conformément à l'invention, la préforme PF peut être fabriquée par frittage flash en utilisant le dispositif représenté sur les figures 3 (vue éclatée) et 4 (vue en conditions opérationnelles). Ce dispositif comprend une matrice cylindrique M réalisée en un matériau conducteur de l'électricité, typiquement du graphite, et deux pistons P1, P2, également en matériau conducteur (généralement le même que celui utilisé pour la matrice) coulissant à l'intérieur de l'évidement central de la matrice M, dans une direction dite axiale (« z »). Ces pistons servent pour appliquer une pression uniaxiale, selon l'axe z, au matériau pulvérulent destiné à former la préforme PF. Cette pression est appliquée par l'intermédiaire des faces d'appui F1, F2 qui coopèrent pour définir de ladite préforme.

Pour faciliter le démoulage de la pièce, sa forme prévoit des dépouilles, par exemple de 5° et/ou des congés. Une lubrification peut être assurée par une pulvérisation à base de graphite sur les différentes surfaces de contact matériau/graphite et graphite/graphite.

En variante, il est possible d'utiliser plus de deux pistons, de manière à limiter les risques de rupture et/ou de permettre l'application de pressions différentes en différents points de la pièce en cours de fabrication.

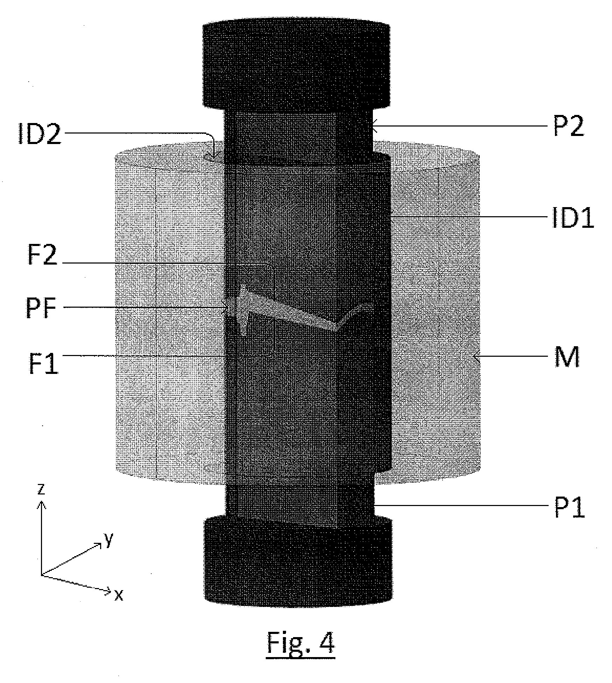

On remarquera que, dans l'assemblage des figures 3 et 4, la pression est appliquée perpendiculairement à la direction d'élongation de la voilure V ou, ce qui revient au même, parallèlement à l'épaisseur (la plus petite dimension) de ladite voilure. Comme cela apparaîtra clairement par la suite, cette orientation constitue une caractéristique importante du procédé de l'invention. Ce montage assure que le frittage se réalise en conditions de matrice flottante, ces conditions ayant été définies plus haut ; cela permet l'obtention d'un matériau compact dans toute la pièce, malgré la forme irrégulière de cette dernière.

A cause de l'orientation précitée de la préforme PF à fabriquer, les sections des pistons P1, P2 présentent une élongation dans la direction x. Toutefois, l'évidement central de la matrice M doit présenter une section sensiblement circulaire, ou en tout cas sans arêtes vives, afin d'éviter une concentration des contraintes qui pourrait conduire à sa rupture. L'adaptation entre les pistons et l'évidement de la matrice est réalisée par l'intermédiaire des inserts ID1, ID2, qui présentent une section généralement en « D » ou en demi-lune, avec une première surface épousant la forme dudit ensemble et une deuxième surface en forme d'arc cylindrique, épousant la forme de la surface interne de la matrice (c'est-à-dire de son évidement central). Les inserts ID1, ID2 sont de préférence réalisés dans le même matériau que la matrice et les pistons (généralement du graphite) afin d'assurer une dilatation thermique aussi uniforme que possible des différents éléments de l'assemblage. Bien entendu, le nombre d'inserts peut être différent de deux.

Comme c'est généralement le cas pour tout procédé de frittage flash, le matériau constitutif de la pièce à réaliser (ou son précurseur) est introduit sous forme de poudre dans le moule, puis une pression est appliquée par les pistons dans la direction axiale z pendant qu'un courant électrique traverse l'ensemble pour réaliser un chauffage rapide par effet Joule. Si le matériau constitutif est conducteur, il est directement traversé par le courant électrique et la chaleur est générée localement si ce matériau n'est pas conducteur, la chaleur est générée dans le moule (qui, lui, est conducteur) et transféré au matériau par conduction.

La température à laquelle le matériau pulvérulent est chauffé est un paramètre important du procédé, car elle a une grande influence sur la microstructure de la pièce ainsi obtenue ; elle doit donc être aussi uniforme que possible sur l'ensemble de la pièce. Cela peut être critique dans le cas d'une pièce complexe car la forme irrégulière de cette dernière tend à introduire une distribution du courant électrique, et donc une température, inhomogène. Dans ces conditions, des écarts de températures peuvent se produire entre différents points de la pièce, ce qui est susceptible d'entrainer une dégradation importante de ses propriétés mécaniques. En particulier, il y a un risque de surchauffe pouvant aller jusqu'à la fusion localisée du matériau.

Une difficulté est constituée par le fait que la température des différentes parties de la pièce ne peut pas être mesurée pendant l'opération de frittage ; typiquement, la température peut être mesurée en temps réel seulement en quelques points de la matrice ou des pistons, grâce à un ou plusieurs capteurs thermiques tels que des pyromètres ou des thermocouples. On procède alors à un étalonnage : l'ensemble constitué par la matrice, les pistons, les inserts et le matériau pulvérulent est conçu, puis modélisé en se servant d'outils CAO. L'effet Joule dont le dispositif est le siège est ensuite simulé en utilisant la méthode des éléments finis, les équations couplées de la chaleur et de l'électricité étant simultanément résolues dans tout le dispositif ; voir à ce propos l'article de G. Molénat, L. Durand, J. Galy, and A. Couret, « Temperature Control in Spark Plasma Sintering: An FEM Approach », Journal of Metallurgy Vol 2010, Article ID 145431. De cette manière, il est possible d'associer à chaque valeur de température mesurée par le pyromètre ou le thermocouple une distribution de la température à l'intérieur du dispositif et du matériau. Cette simulation permet une évaluation de la température du matériau en tout point, ce qui évite en particulier toute surchauffe, par l'asservissement de la puissance du courant électrique à la température de consigne.

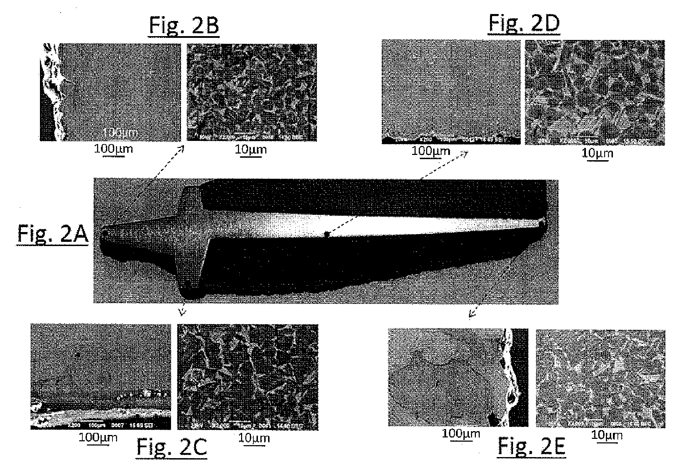

La préforme de la figure 1 a été fabriquée avec une Machine SPS de type « Sumitomo 2080 » en appliquant une pression de 100 MPa et en amenant le matériau constitutif (TiAl) à une température de 1200°C environ (température mesurée par le pyromètre, correspondant à une température au coeur de la pièce d'environ 1260°C) au moyen d'une série d'impulsions de courant continu (rampe de température de consigne de 100°C/min jusqu'à 1125°C, puis de 25°C/min jusqu'à 1200°C, suivi d'un maintien pendant deux minutes - les températures sont mesurées par un pyromètre visant la surface extérieure de la matrice). Comme le montrent les figures 2A - 2E, ces conditions opérationnelles ont permis d'obtenir un matériau très compact et homogène, sans aucune porosité visible au microscope électronique à balayage. Comme cela apparaît sur les figures, la microstructure du TiAI compacté est de type biphasé dans l'ensemble de la pièce.

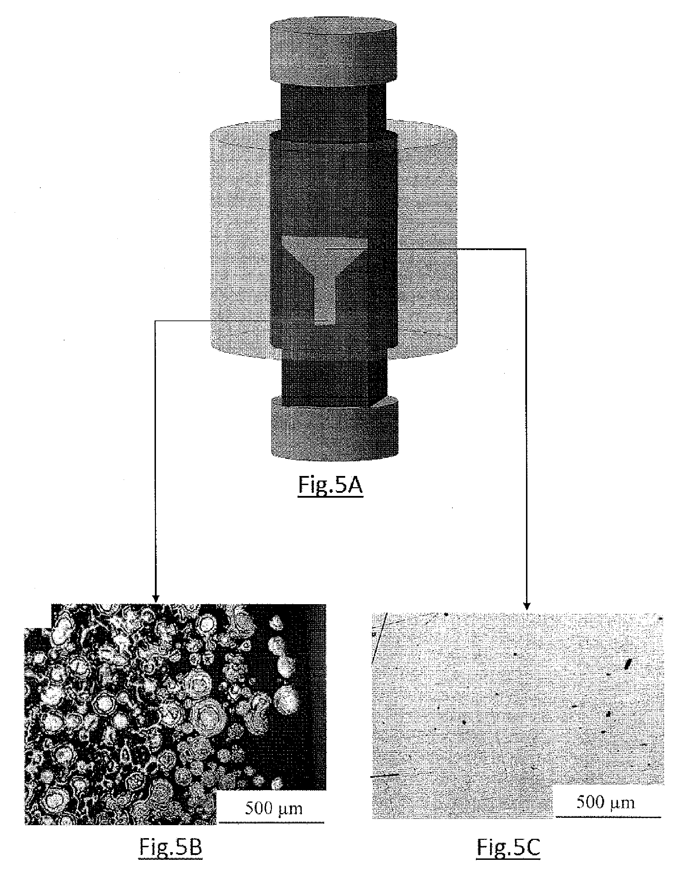

A titre d'exemple comparatif, la figure 5A montre une configuration de frittage flash dans laquelle la pression est appliquée parallèlement à l'axe d'élongation de la voilure. Une telle configuration ne permet pas de satisfaire aux conditions de matrice flottante car, dans la partie destinée à former la pointe de la voilure, le matériau ne peut pas se déplacer parallèlement aux surfaces d'appui latérales qui délimitent les faces principales de ladite voilure, ni parallèlement à la direction d'application de la pression. Une observation au microscope électronique à balayage montre que si la compacité de la base est satisfaisante (figure 5C), la pointe de la voilure est très poreuse (figure 5B). Une aube de turbine fabriquée en utilisant cette configuration présenterait des propriétés mécaniques insuffisantes pour permettre son utilisation. On remarquera que les figures 5A - 5C se rapportent à une aube dont la voilure présente une élongation nettement moins prononcée que celle de la pièce considérée en référence aux figures 1 à 4. Si on essayait de réaliser la pièce de la figure 1 dans la configuration de la figure 5A, on obtiendrait un état de compaction de la voilure encore moins satisfaisant, avec encore plus d'hétérogénéités microstructurales. Ce qui confirme l'importance de l'orientation de la pièce dans la matrice de frittage.

Le procédé de l'invention a été décrit en détail en référence à la fabrication d'une aube de turbine en TiAl. Il s'agit là d'un cas particulièrement intéressant, tant sur le plan conceptuel (en raison de la grande complexité géométrique d'une telle pièce, et des exigences très poussées en termes de résistance mécanique) qu'applicatif, mais non limitatif. Ainsi, le procédé de l'invention s'applique à la fabrication par frittage flash de toute sorte de pièce présentant une forme complexe, comprenant au moins une première partie élancée de type tige, plaque, biseau ou coque et au moins une seconde partie de type base, socle ou pièce massive, ne possédant pas d'élancement dans la direction d'élancement de la dite première partie.

Le matériau constitutif d'une telle pièce peut être tout métal, alliage intermétallique, céramique ou composite susceptible d'être compacté par frittage flash.

Une autre application particulièrement intéressante du procédé de l'invention est constituée par la réalisation de pièces complexes - et notamment d'aubes de turbine - en composite métal-siliciure. Ces matériaux combinent un siliciure, qui apporte résistance au fluage et à l'oxydation, une matrice métallique (Nb ou Mo) qui fournit ductilité et ténacité (l'utilisation d'un siliciure sans matrice métallique est possible, mais les pièces ainsi obtenues seraient fragiles) et d'éventuels éléments d'addition tels que Ti, Cr, Hf, Al. Leur utilisation pour la réalisation d'aubes de turbine permettrait un gain d'environ 150°C sur la température de fonctionnement des moteurs aéronautiques. Toutefois, bien que les recherches sur ces matériaux aient commencé dans les années 80 du 20^{e} siècle, leur mise en forme n'est toujours pas maitrisée.

Une préforme d'aube semblable à celle de la figure 1 a été réalisée en utilisant, en tant que matériau constitutif, un mélange à 50%-50% en volume de deux poudres achetées chez Alfa Aesar: Nb pur et Nb₅Si₃.

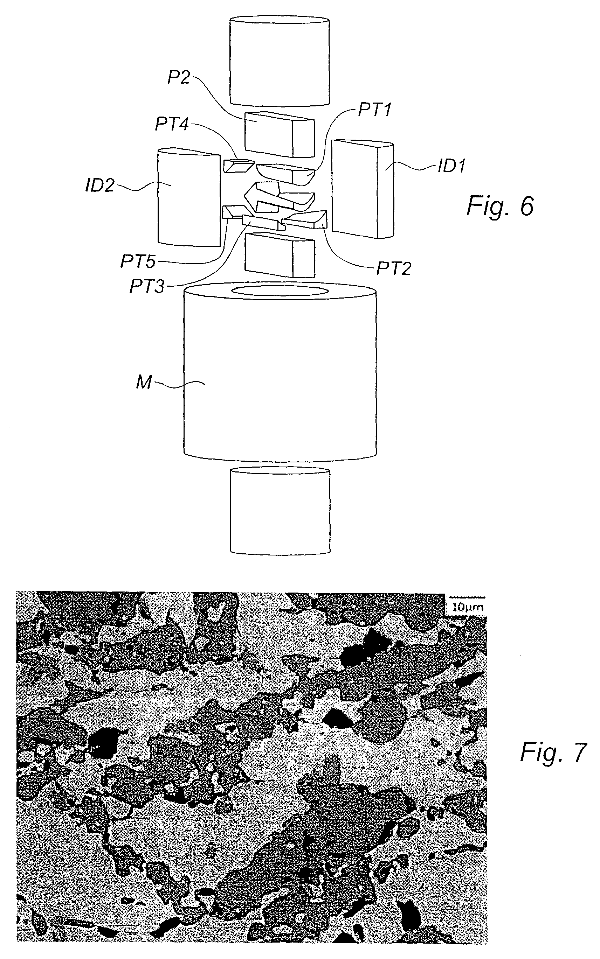

Le frittage flash a été effectué en appliquant une pression de 125 MPa pendant 2 minutes à une température à coeur de 1700 °C (rampe de température de consigne de 100°C/min jusqu'à 1525°C, puis de 25°C/min jusqu'à 1600°C suivi d'un maintien pendant deux minutes, ces températures étant mesurées par le pyromètre). Ces conditions sont sensiblement plus contraignantes que celles permettant le frittage du TiAl. Le procédé a été mis en oeuvre au moyen de l'appareillage illustré sur la figure 6. On peut remarquer sur cette figure que la matrice recouvre plus complètement les pistons pour améliorer la circulation du courant électrique et donc obtenir une meilleure répartition de la chaleur au sein de l'assemblage. En outre, des pièces de transmission de force PT1 - PT5 sont interposées entre les pistons et le matériau constitutif. Ces pièces portent des surfaces d'appui coopérant pour définir la forme de la pièce ; plus précisément, dans l'exemple de la figure 6, les surfaces d'appui portées par les pièces de transmission de force définissent la voilure de l'aube et la partie inférieure de son socle, la partie supérieure du socle étant définie par des surfaces d'appui portées par les pistons. Comme on peut le voir sur la figure 7, la microstructure obtenue est biphasée, contenant en outre des oxydes (régions foncées), dont l'apparition est due aux températures élevées mises en jeu. Des porosités de l'ordre du micron subsistent car la composition du matériau n'a pas été optimisée.

## Revendications

1. Procédé de fabrication par frittage flash d'une pièce (PF) métallique, céramique ou en composite à partir d'un matériau constitutif pulvérulent, comportant une seule étape de frittage flash consistant en l'application simultanée, à l'intérieur d'une matrice (M) en matériau conducteur de l'électricité et comportant un évidement central sans arêtes vives, d'une pression uniaxiale et d'un courant électrique audit matériau constitutif pulvérulent, ladite pression uniaxiale étant appliquée, directement ou par l'intermédiaire de pièces de transmission de force (PT1 - PT5) conductrices de l'électricité, au moyen d'au moins deux pistons (P1, P2) également conducteurs de l'électricité, coulissant l'un vers l'autre à l'intérieur de ladite matrice, lesdits pistons et/ou lesdites pièces de transmission de force présentant des surfaces d'appui en contact avec ledit matériau constitutif pulvérulent et coopérant entre elles pour définir la forme de la pièce à fabriquer, dans lequel :
- lesdites surfaces d'appui coopèrent pour définir une forme complexe de la pièce à fabriquer, ladite pièce à fabriquer présentant une forme comprenant au moins une première partie (V) élancée de type tige, plaque, biseau ou coque et une seconde partie (B) de type base, socle ou pièce massive, ne possédant pas d'élancement dans la direction d'élancement de la dite première partie ;
- ladite pression uniaxiale est appliquée dans une direction (z) parallèle à la plus petite dimension de ladite première partie de la pièce, ou de l'une de ses deux plus petites dimensions s'il s'agit d'une tige,
ladite pièce ainsi fabriquée présente une microstructure compacte et homogène.

2. Procédé selon la revendication 1, dans lequel au moins les deux dits pistons et la pièce à fabriquer sont entourés d'inserts (ID1, ID2) présentant une section généralement en « D », avec une première surface épousant la forme d'un ensemble comprenant la matrice, les pistons, le matériau constitutif pulvérulent et les inserts et une deuxième surface en forme d'arc cylindrique, épousant la forme de la surface interne de la matrice.

3. Procédé selon l'une des revendications précédentes comportant :
- une étape préalable de calibrage des températures, de manière à associer à chaque valeur de la température mesurée en un point de la matrice ou des pistons par un capteur de température un champ de température à l'intérieur d'un ensemble comprenant la matrice, les pistons, le matériau constitutif pulvérulent et les inserts éventuels ; et
- un asservissement de la puissance du courant électrique de manière à contrôler l'écart entre la température mesurée par le dit capteur et une température de consigne.

4. Procédé selon la revendication précédente dans lequel, ladite température de consigne est déterminée par simulation numérique.

5. Procédé selon l'une des revendications précédentes dans lequel ledit matériau constitutif pulvérulent est à base d'un alliage intermétallique.

6. Procédé selon la revendication précédente dans lequel ledit alliage intermétallique est un alliage à base de titane, tel qu'un alliage base TiAI.

7. Procédé selon l'une des revendications 1 à 4 dans lequel ledit matériau constitutif pulvérulent comprend un métal, tel que Nb ou Mo, et un siliciure du même ou d'un autre métal.

8. Procédé selon l'une des revendications précédentes dans lequel ladite première partie de la pièce à fabriquer est une coque gauche.

9. Procédé selon la revendication précédente dans lequel ladite pièce à fabriquer est une préforme d'aube de turbine près des cotes.

## Patentansprüche

1. Verfahren für die Herstellung durch Flash-Sintern eines Metall-, Keramik- oder Verbundstoffteils (PF) aus einem konstitutiven pulverförmigen Material, umfassend einen einzigen Flash-Sinter-Schritt, der in der gleichzeitigen Anwendung im Innern einer Matrize (M) aus stromleitenden Material und umfassend eine zentrale Aushöhlung ohne scharfe Kanten eines einaxialen Drucks und eines elektrischen Stroms auf das konstitutive pulverförmige Material besteht, wobei der einaxiale Druck direkt oder mittels stromleitender Kraftübertragungsmittel (PT1 - PT5) mit Hilfe von mindestens zwei ebenfalls stromleitenden Kolben (P1, P2), die zueinander im Innern der Matrize gleiten, angewendet wird, wobei die Kolben und/oder die Kraftübertragungsmittel Stützflächen im Kontakt mit dem konstitutiven pulverförmigen Material aufweisen und untereinander zusammenwirken, um die Form des herzustellenden Teils zu definieren, wobei:
- die Stützflächen zusammenwirken, um eine komplexe Form des herzustellenden Teils zu definieren, wobei das herzustellende Teil eine Form aufweist, die mindestens einen ersten schlanken Teil (V) vom Typ Stange, Platte, Schrägung oder Schale und einen zweiten Teil (B) vom Typ Basis, Sockel oder massives Teil hat, das keine Schlankheit in der Schlankheitsrichtung des ersten Teils besitzt,
- der einaxiale Druck in einer Richtung (z) angewendet wird, die parallel zur kleinsten Dimension des ersten Teils des Teils ist, oder einer seiner zwei kleinsten Dimensionen, wenn es sich um eine Stange handelt,
wobei das derart hergestellte Teil eine kompakte und homogene Mikrostruktur aufweist.

2. Verfahren nach Anspruch 1, wobei mindestens die zwei Kolben und das herzustellende Teil von Einsätzen (ID1, ID2) umgeben sind, die einen allgemein D-förmigen Querschnitt aufweisen, mit einer ersten Fläche, die die Form einer Einheit, welche die Matrize umfasst, annimmt, wobei die Kolben, das konstitutive pulverförmige Material und die Einsätze und eine zweite Fläche in Form eines zylindrischen Bogens die Form der inneren Fläche der Matrize annehmen.

3. Verfahren nach einem der vorangehenden Ansprüche, aufweisend:
- einen vorherigen Kalibrierungsschritt der Temperaturen, um jedem an einem Punkt der Matrize oder der Kolben von einem Temperatursensor gemessenen Temperaturwert einen Temperaturbereich im Innern einer Einheit, die die Matrize, die Kolben, das konstitutive pulverförmige Material und die eventuellen Einsätze umfasst, zuzuweisen, und
- eine Regelung der Leistung des elektrischen Stroms, um die Differenz zwischen der von dem Sensor gemessenen Temperatur und einer Solltemperatur zu steuern.

4. Verfahren nach vorangehendem Anspruch, wobei die Solltemperatur durch digitale Simulation bestimmt wird.

5. Verfahren nach einem der vorangehenden Ansprüche, wobei das konstitutive pulverförmige Material auf der Basis einer intermetallischen Legierung ist.

6. Verfahren nach vorangehendem Anspruch, wobei die intermetallische Legierung eine Legierung auf der Basis von Titan wie eine auf TiAl basierende Legierung ist.

7. Verfahren nach einem der Ansprüche 1 bis 4, wobei das konstitutive pulverförmige Material ein Metall wie Nb oder Mo und eine Siliziumverbindung desselben oder eines anderen Metalls umfasst.

8. Verfahren nach einem der vorangehenden Ansprüche, wobei der erste Teil des herzustellenden Teils eine linke Schale ist.

9. Verfahren nach vorangehendem Anspruch, wobei das herzustellende Teil eine passmaßgenaue Turbinenschaufelvorform ist.

## Claims

1. A method for manufacturing by flash sintering a component (PF) made of metal, ceramic or composite from a pulverulent constituent material, comprising only one flash sintering step consisting of the simultaneous application, within a die (M) made of an electrically conducting material and comprising a central recess that has no sharp edges, of a uniaxial pressure and of an electrical current to said pulverulent constituent material, said uniaxial pressure being applied, either directly or via electrically conducting force-transmitting components (PT1 - PT5), by means of at least two pistons (P1, P2) also electrically conducting, sliding one toward the other inside said die, said pistons and/or said force-transmitting components having bearing surfaces in contact with said pulverulent constituent material and collaborating with one another to define the shape of the component to be manufactured, wherein:
- said bearing surfaces collaborate to define a complex shape of the component to be manufactured, said component to be manufactured comprising at least a first part (V) that is slender of the rod, plate, bevel or shell type and a second part (B) of a base, mount or solid component type, that is not slender in the direction in which said first part is slender;
- said uniaxial pressure is applied in a direction (z) parallel to the smallest dimension of said first part of the component, or of one of its two smallest dimensions in the case of a rod,
said component thus manufactured has an homogeneous and compact microstructure.

2. The method as claimed in claim 1, in which at least the two said pistons and the component to be manufactured are surrounded by inserts (ID1, ID2) of generally D-shaped overall cross section having a first surface espousing the shape of an assembly comprising the die, the pistons, the pulverulent constituent material and the inserts and a second surface in the shape of a cylindrical arc, espousing the shape of the internal surface of the die.

3. The method as claimed in one of the preceding claims, comprising:
- a prior step of calibrating the temperatures in order to associate each value of temperature measured at a point on the die or the pistons by a temperature sensor to a temperature field within an assembly comprising the die, the pistons, the pulverulent constituent material and any inserts can be associated with; and
- a feedback control of the strength of the electric current so as to control the difference between the temperature measured by said sensor and a reference temperature.

4. The method as claimed in the preceding claim, in which said reference temperature is determined by numerical simulation.

5. The method as claimed in one of the preceding claims, in which said pulverulent constituent material is based on a metal-metal alloy.

6. The method as claimed in the preceding claim, in which said metal - metal alloy is an alloy based on titanium, such as an alloy based on TiAl.

7. The method as claimed in one of claims 1 to 4, in which said pulverulent constituent material contains a metal, such as Nb or Mo, and a silicide of the same or of a different metal.

8. The method as claimed in one of the preceding claims, in which said first part of the component to be manufactured is a skew shell.

9. The method as claimed in the preceding claim, in which said component to be manufactured is a turbine blade preform to near-finished dimensions.
